(19) Europäisches Patentamt
European Patent Office
Office européen des brevets

(11) EP 3 865 528 A1

(12) EUROPEAN PATENT APPLICATION
published in accordance with Art. 153(4) EPC

(43) Date of publication:
**18.08.2021 Bulletin 2021/33**

(21) Application number: **19872029.4**

(22) Date of filing: **09.05.2019**

(51) Int Cl.:
***C08G 63/183*** $^{(2006.01)}$ ***C08G 63/58*** $^{(2006.01)}$
***C08G 63/199*** $^{(2006.01)}$ ***C08L 67/02*** $^{(2006.01)}$

(86) International application number:
**PCT/KR2019/005998**

(87) International publication number:
**WO 2020/075947 (16.04.2020 Gazette 2020/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.10.2018 KR 20180120750**

(71) Applicant: **SK Chemicals Co., Ltd.**
**Seongnam-si, Gyeonggi-do 13494 (KR)**

(72) Inventors:
- **LEE, Yoo Jin**
  **Seongnam-si, Gyeonggi-do 13441 (KR)**
- **KIM, Sung-Gi**
  **Yongin-si, Gyeonggi-do 16823 (KR)**
- **HWANG, Da-Young**
  **Seongnam-si, Gyeonggi-do 13494 (KR)**

(74) Representative: **Berggren Oy**
**P.O. Box 16**
**Eteläinen Rautatiekatu 10A**
**00101 Helsinki (FI)**

# (54) POLYESTER COPOLYMER HAVING EXCELLENT CHEMICAL RESISTANCE AND TRANSPARENCY

(57) The polyester copolymer according to the present invention is excellent in chemical resistance and transparency and thus can be usefully applied to the production of various containers.

EP 3 865 528 A1

## Description

### [Technical Field]

The present invention relates to a polyester copolymer which is excellent in chemical resistance and transparency and is usefully applied to the production of various containers.

### [Background Art]

PET (polyethylene terephthalate) which is representative of a polyester resin is widely used in commercial products due to its low cost and excellent physical/chemical properties. However, since the PET has a high crystallinity, a high temperature is required during processing and transparency of molded products is deteriorated. Further, there is a problem in that since the PET does not have good heat resistance, a shape of a bottle molded by using PET is deformed during a high temperature filling process of the beverage. In order to prevent these problems, an attempt has been made to increase the heat resistance of the bottle through a bottleneck crystallization process and a heat setting process before and after the bottle molding, but this leads to a decrease in transparency of the bottle.

As a resin having high transparency, PETG (glycol-modified polyethylene terephthalate), which is a non-crystalline resin, is known. This resin is excellent in transparency, but it has the disadvantages that internal penetration of chemical substances is easy and the chemical resistance is not good. Especially, a cosmetic container such as a sun block product containing an ultraviolet screening component or a perfume product containing a large amount of an alcohol component, or a container of various chemicals is required to have both high transparency and chemical resistance.

Accordingly, there is a need to develop a novel resin having more improved chemical resistance as well as having transparency equivalent to or more improved then that of the conventionally known PETG resin.

### [DETAILED DESCRIPTION OF THE INVENTION]

### [Technical Problem]

An object of the present invention is intended to provide a polyester copolymer having excellent chemical resistance and transparency.

Another object of the present invention is intended to provide article including the above-mentioned polyester copolymer.

### [Technical Solution]

In one aspect of the invention, there is provided a polyester copolymer including a first repeating unit represented by the following Chemical Formula 1; and at least one of a second repeating unit represented by the following Chemical Formula 2 and a third repeating unit represented by the following Chemical Formula 3, wherein the polyester copolymer satisfies the following Mathematical Formula 1:

[Mathematical Formula 1]

$$H \leq 6$$

in Mathematical Formula 1,
H means a haze value measured according to ASTM D1003-97 after a polyester copolymer specimen (thickness: 6 mm) is immersed in ethanol and then stored at 60°C for 24 hours,

[Chemical Formula 1]

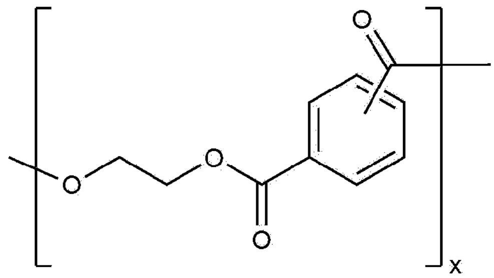

[Chemical Formula 2]

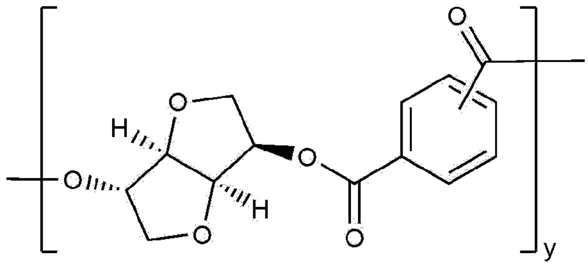

[Chemical Formula 3]

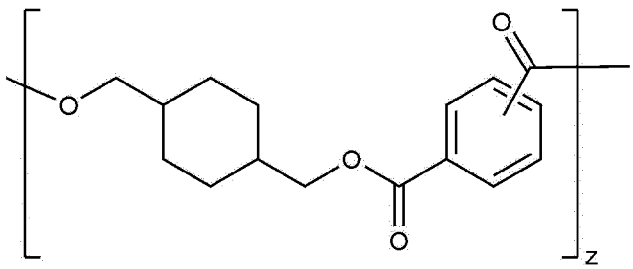

in Chemical Formulas 1 to 3,
x, y, and z are mole fractions in the copolymer, respectively, wherein the sum of y and z is 5 mol% or more and less than 20 mol%.

Hereinafter, embodiments of the present invention will be described in detail.

**(Repeating unit)**

The first repeating unit according to the present invention is prepared by reacting terephthalic acid or a derivative thereof with a diol compound described later. The derivative of terephthalic acid is a compound capable of forming the above-mentioned repeating unit, and examples thereof include isophthalic acid, dimethylisophthalate, phthalic acid, dimethyl phthalate, phthalic anhydride, and the like. Moreover, during the production of each repeating unit, terephthalic acid or a derivative thereof may be used singly or in combination of two or more thereof.

The first repeating unit according to the present invention is prepared by reacting terephthalic acid or a derivative thereof with ethylene glycol, and is a main repeating unit of the polyester copolymer according to the present invention. In Chemical Formula 1, x is a mole fraction of the first repeating unit in the polyester copolymer, preferably 80 mol% or more and 95 mol% or less.

The second repeating unit according to the present invention is prepared by reacting terephthalic acid or a derivative thereof with isosorbide, and the third repeating unit according to the present invention is prepared by reacting terephthalic acid or a derivative thereof with cyclohexane dimethanol. At least one of the second repeating unit and the third repeating unit is contained in the polyester copolymer according to the present invention, and preferably, includes both the second repeating unit and the third repeating unit. In Chemical Formula 2, y is a mole fraction of the second

repeating unit in the polyester copolymer, and in Chemical Formula 3, z is a mole fraction of the third repeating unit in the polyester copolymer.

Preferably, the sum of y and z is 5 mol% or more and less than 20 mol%. At this time, when only the second repeating unit is contained in the polyester copolymer, z is 0, and when only the third repeating unit is contained in the polyester copolymer, y is 0.

In particular, the polyester copolymer according to the present invention is excellent in chemical resistance, and the mole fraction of the second repeating unit and the third repeating unit has a significant influence on the chemical resistance. When the polyester copolymer has the molar fraction of the second repeating unit and the third repeating unit as in Examples described later, it can be confirmed that the chemical resistance is remarkably excellent as compared with when it is not.

**(Method for Preparing Polyester Copolymer)**

The above-mentioned repeating units may be prepared via (a) an esterification reaction or transesterification reaction of terephthalic acid or a derivative thereof, ethylene glycol, isosorbide and/or cyclohexane dimethanol, and (b) a polycondensation reaction.

Specifically, the polyester copolymer can be prepared via the steps of (a) carrying out an esterification reaction or a transesterification reaction of terephthalic acid or a derivative thereof, ethylene glycol, and isosorbide and/or cyclohexanedimethanol; and (b) subjecting the esterification or transesterification reaction product to a polycondensation reaction.

Here, the preparation method may be performed in batch, semi-continuous or continuous mode, and the esterification reaction or transesterification reaction and the polycondensation reaction are preferably carried out under an inert gas atmosphere, the mixing of the polyester copolymer and other additives may be simple mixing or mixing via extrusion.

In addition, a solid-phase reaction may be subsequently performed as needed, Specifically, a method for preparing a polyester copolymer according to one embodiment of the invention may further include, after step (b), (c) crystallizing the polymer prepared by the polycondensation reaction (melt polymerization); and (d) subjecting the crystallized polymer to a solid-phase reaction.

In the (a) esterification reaction or transesterification reaction, a catalyst may be used. As such a catalyst, there may be mentioned sodium methylate, magnesium methylate; acetates, borates, fatty acid salts, carbonates and alkoxy salts of Zn, Cd, Mn, Co, Ca, Ba, Ti, Sn, etc.; oxides of metal Mg; Pb, Zn, Sb, Ge, Sn, etc.

The (a) esterification reaction or transesterification reaction may be carried out in batch, semi-continuous or continuous mode. Respective raw materials may be added separately, but are preferably added in a slurry form in which the dicarboxylic acid or the derivative thereof is mixed in the diol.

A polycondensation catalyst, a stabilizer, a coloring agent, a crystallizing agent, an antioxidant, a branching agent, or the like, may be added to the slurry before the start of the (a) esterification reaction or transesterification reaction or to the product after the completion of the esterification reaction or transesterification reaction.

However, the timing of adding the additives is not limited thereto, and they may be applied at any time during the preparation of the polyester copolymer. As the polycondensation catalyst, one or more of conventional titanium-based, germanium-based, antimony-based, aluminum-based, tin-based compounds, etc., may be suitably selected and used. As useful titanium-based catalyst, there may be mentioned tetraethyl titanate, acetyltripropyl titanate, tetrapropyl titanate, tetrabutyl titanate, polybutyl titanate, 2-ethylhexyl titanate, octylene glycol titanate, lactate titanate, triethanolamine titanate, acetylacetonate titanate, ethylacetoacetic ester titanate, isostearyl titanate, titanium dioxide, titanium dioxide/silicon dioxide copolymer, and titanium dioxide/zirconium dioxide copolymer, etc. In addition, examples of useful germanium-based catalyst may include germanium dioxide and a copolymer thereof, etc. As the stabilizer, a phosphorus-based compound such as phosphoric acid, trimethylphosphate, triethylphosphate, etc., may be generally used. An added content thereof is 10 to 200 ppm based on a phosphorus element amount relative to the weight of the final polymer (polyester copolymer). When the added content of the stabilizer is less than 10 ppm, a stabilizing effect is not sufficient, and a color of the polymer may turn yellow. When the added content thereof is more than 200 ppm, a polymer having a desired high degree of polymerization may not be obtained. Further, as the coloring agent to be added for improving a color of the polymer, there may be mentioned general coloring agents such as cobalt acetate and cobalt propionate, etc. An added content of the coloring agent is 10 to 200 ppm based on a cobalt element amount relative to the weight of the final polymer (polyester copolymer). If necessary, an anthraquionone-based compound, a perinone-based compound, an azo-based compound, a methine-based compound, etc., may be used as a coloring agent for an organic compound. Examples of commercially available products may include a toner such as Polysynthren Blue RLS from Clarient Corp., Solvaperm Red BB from Clarient Corp., etc. The added content of the coloring agent for the organic compound may be adjusted to 0 to 50 ppm relative to the weight of the final polymer. When the coloring agent is used at a content beyond the above-described range, a yellow color of the polyester copolymer may not be sufficiently blocked

or physical properties may be deteriorated.

Examples of the crystallizing agent may include a crystal nucleating agent, an ultraviolet absorber, a polyolefin-based resin, a polyamide resin, etc. Examples of the antioxidant may include a hindered phenol-based antioxidant, a phosphate-based antioxidant, a thioether-based antioxidant, or a mixture thereof, etc. The branching agent is a general branching agent having three or more functional groups, and for example, may include trimellitic anhydride, trimethylol propane, trimellitic acid, or a mixture thereof, etc.

The (a) esterification reaction or transesterification reaction may be carried out at a temperature of 150 to 300°C or 200 to 270°C and a pressure of 0 to 10.0 kgf/$cm^2$ (0 to 7355.6 mmHg), 0 to 5.0 kgf/$cm^2$ (0 to 3677.8 mmHg) or 0.1 to 3.0 kgf/$cm^2$ (73.6 to 2206.7 mmHg). Here, the pressures outside the parentheses mean a gauge pressure (expressed in kgf/$cm^2$), and the pressures in the parentheses mean an absolute pressure (expressed in mmHg).

When the reaction temperature and the pressure are out of the above-described range, physical properties of the polyester copolymer may be deteriorated. The reaction time (average residence time) is usually 1 to 24 hours or 2 to 8 hours, and may be varied depending on the reaction temperature, the pressure, and the molar ratio of the diol to the dicarboxylic acid or the derivative thereof to be used.

The product obtained through the esterification reaction or the transesterification reaction may be prepared into a polyester copolymer having a higher degree of polymerization through the polycondensation reaction. Generally, the polycondensation reaction is carried out at a temperature of 150 to 300°C, 200 to 290°C, or 250 to 290°C under a reduced pressure of 0.01 to 400 mmHg, 0.05 to 100 mmHg or 0.1 to 10 mmHg. Here, the pressure means a range of an absolute pressure. The reduced pressure condition of 0.01 to 400 mmHg is for removing glycol, etc., that are by-products of the polycondensation reaction and the isosorbide, etc., that are unreacted materials. Accordingly, when the reduced pressure condition is out of the above-described range, by-products and unreacted materials may not be sufficiently removed. Moreover, when the reaction temperature for the polycondensation reaction is out of the above-described range, physical properties of the polyester copolymer may be deteriorated. The polycondensation reaction is performed for a necessary time until the desired intrinsic viscosity is reached, for example for an average residence time of 1 to 24 hours.

In order to reduce the content of the unreacted materials such as isosorbide, etc., remaining in the polyester copolymer, the unreacted raw materials may be discharged out of the system by intentionally maintaining the vacuum reaction long at the end of the esterification reaction or the transesterification reaction or at the beginning of the polycondensation reaction, that is, in a state in which the viscosity of the resin is not sufficiently high. When the viscosity of the resin is increased, the raw materials remaining in a reactor are difficult to escape out of the system. For example, the reaction product obtained through the esterification reaction or the transesterification reaction before the polycondensation reaction may be allowed to stand at a reduced pressure of about 400 to 1 mmHg or about 200 to 3 mmHg for 0.2 to 3 hours, thereby effectively removing unreacted materials such as isosorbide, etc., remaining in the polyester copolymer. At this time, the temperature of the product may be controlled to be equal to that of the esterification reaction or the transesterification reaction or that of the polycondensation reaction or to a temperature therebetween.

As a step of flowing unreacted raw materials out of the system through the control of the vacuum reaction is further added, it is possible to reduce the content of unreacted materials such as isosorbide remaining in the polyester copolymer. As a result, a polyester copolymer satisfying the physical properties of one embodiment can be obtained more effectively.

Meanwhile, the polymer after the polycondensation reaction preferably may have an intrinsic viscosity of 0.45 to 0.75 dl/g.

In particular, if the crystallization step (c) and the solid phase polymerization step (d) described above are employed, the intrinsic viscosity of the polymer after the polycondensation reaction can be adjusted to 0.45 to 0.75 dl/g, 0.45 to 0.70 dl/g or 0.50 to 0.65 dl/g. If the intrinsic viscosity of the polymer after the polycondensation reaction is less than 0.45 dl/g, a reaction rate in the solid-phase reaction is significantly lowered, and a polyester copolymer having a very wide molecular weight distribution is obtained. When the intrinsic viscosity is greater than 0.75 dl/g, a possibility of discoloration of the polymer is increased due to shear stress between a stirrer and a reactor as a viscosity of a molten material during melt polymerization is increased, and side reaction materials such as acetaldehyde are increased. In addition, the crystallization rate becomes significantly slow, fusion occurs in the process of crystallization, and the pellet shape may also be easily deformed.

Meanwhile, if the crystallization step (c) and the solid phase polymerization step (d) described above are not employed, the intrinsic viscosity of the polymer after the polycondensation reaction can be adjusted to 0.65 to 0.75 dl/g. If the intrinsic viscosity is less than 0.65 dl/g, the crystallization rate is increased due to a low molecular weight polymer, making it difficult to provide a polyester copolymer with excellent heat resistance and transparency. When the intrinsic viscosity is greater than 0.75 dl/g, a possibility of discoloration of the polymer is increased due to shear stress between a stirrer and a reactor as a viscosity of a molten material during melt polymerization is increased, and side reaction materials such as acetaldehyde are increased.

The polyester copolymer according to one embodiment may be prepared through steps (a) and (b). If necessary,

after the polycondensation reaction step (b), the crystallization step (c) and the solid phase polymerization step (d) may be further performed to provide a polyester copolymer having a higher degree of polymerization.

In particular, in the crystallization step (c), the polymer obtained through the polycondensation reaction step (b) is discharged out of the reactor to perform granulation. A method of performing the granulation may be a strand cutting method in which the polymer is extruded into a strand shape, solidified in a cooling liquid, and then cut with a cutter, or an underwater cutting method in which a die hole is immersed in a cooling liquid, the polymer is directly extruded into the cooling liquid and cut with a cutter. Generally, in the strand cutting method, it is required that the strand is well solidified by maintaining a temperature of the cooling liquid to be low so as not to cause a problem in cutting. In the underwater cutting method, it is preferred to maintain the temperature of the cooling liquid to meet the polymer so that the shape of the polymer is uniform. However, in the case of a crystalline polymer, the temperature of the cooling liquid may be intentionally maintained to be high, thereby inducing crystallization during the discharge.

Meanwhile, it is also possible to additionally water-wash the granulated polymer. A temperature of water during the washing is preferably equal to the glass transition temperature of the polymer or lower than that by about 5 to 20°C, and when the temperature of water is higher than the above-described range, it is not preferred since fusion may occur. In the case of the particles of the polymer in which the crystallization is induced during the discharge, the fusion may not occur even at a temperature higher than the glass transition temperature, and thus, the temperature of water may be determined according to a degree of crystallization. By water-washing the granulated polymer, it is possible to remove the raw materials that are dissolved in water among the unreacted raw materials. It is advantageous that a particle size is small since as the smaller the particle size, the wider the surface area relative to a weight of particles. In order to achieve the purpose, the particles may be made to have an average weight of about 14 mg or less.

The granulated polymer is subjected to the crystallization step to prevent fusion during the solid-phase reaction. The crystallization step may proceed in an atmosphere, inert gas, water vapor, water vapor-containing inert gas atmosphere or in solution, and may be performed at 110°C to 180°C or 120°C to 180°C. When the temperature is low, a rate at which crystals of the particles are formed is excessively slow. When the temperature is high, a rate at which a surface of the particles is melted faster than a rate at which the crystals are formed, and the particles adhere to each other to cause fusion. Since the heat resistance of the particles is increased as the particles are crystallized, it is also possible to crystallize the particles by dividing the crystallization into several steps and raising the temperature stepwise.

The solid-phase reaction may be carried out under an inert gas atmosphere such as nitrogen, carbon dioxide, argon, etc., or at a reduced pressure of 400 to 0.01 mmHg and at a temperature of 180 to 220° C for an average residence time of 1 hour or more, preferably 10 hours or more. By performing the solid-phase reaction, the molecular weight may be additionally increased, and the raw materials remaining without being reacted in the melting reaction, and a cyclic oligomer, acetaldehyde, etc., that are generated during the reaction, may be removed.

In order to provide the polyester copolymer according to one embodiment, the solid phase polymerization can be carried out until the intrinsic viscosity reaches a value of 0.10 to 0.40 dl/g higher than the intrinsic viscosity of the resin obtained in the polycondensation reaction step (b). If the difference between the intrinsic viscosity of the resin after the solid phase polymerization and the intrinsic viscosity of the resin before the solid phase polymerization is less than 0.10 dl/g, an effect of sufficiently improving the degree of polymerization cannot be obtained. If the difference between the intrinsic viscosity of the resin after the solid phase polymerization and the intrinsic viscosity of the resin before the solid phase polymerization is greater than 0.40 dl/g, the molecular weight distribution becomes wide and thus sufficient heat resistance can not be exhibited. In addition, as the content of low molecular weight polymer is relatively increased and the crystallization rate is increased, the possibility of the occurrence of haze increases.

The solid phase polymerization can be carried out until the intrinsic viscosity of the resin is 0.10 to 0.40 dl/g higher than the intrinsic viscosity of the resin before the solid phase polymerization and reaches a value of 0.70 dl/g or more, 0.70 to 1.0 dl/g, or 0.70 to 0.95 dl/g. When the solid phase polymerization is carried out until the intrinsic viscosity of such a range is reached, the molecular weight distribution of the polymer becomes narrow and the crystallization rate during molding can be lowered. Thereby, the heat resistance and the crystallization degree can be improved without reducing the transparency. If the intrinsic viscosity of the resin after the solid phase polymerization reaction is less than the above range, the crystallization rate increases due to a low molecular weight polymer and thus it may be difficult to provide a polyester copolymer having excellent heat resistance and transparency.

**(Properties of Polyester Copolymer)**

The polyester copolymer according to the present invention is excellent in chemical resistance and transparency, and satisfies Mathematical Formula 1 above.

Mathematical Formula 1 means that the specimen to be measured is measured after being immersed in ethanol for a certain period of time. When the chemical resistance is not good, the haze value tends to increase rapidly after immersion in ethanol. However, the polyester copolymer according to the present invention is excellent in chemical resistance and thus satisfies Mathematical Formula 1.

As in Examples and Comparative Examples described later, when the haze value was measured after a specimen was immersed in ethanol and then stored at 60°C for 24 hours, the polyester copolymer according to the present invention showed a haze value of 5 or less, whereas Comparative Examples all showed the value of greater than 6. Preferably, H in Mathematical Formula 1 is 5 or less. Further, the theoretical lower limit of the haze value is 0, and as an example, the value of H may be 0.01 or more, 0.1 or more, 0.5 or more, or 1 or more.
Further, the polyester copolymer according to the present invention has a haze value of 4 or less, more preferably 3.5 or less, or 3 or less, when the specimen (thickness: 6 mm) is measured according to ASTM D1003-97. Further, the theoretical lower limit of the haze value is 0, and as an example, the haze value may be 0.01 or more, 0.1 or more, 0.5 or more, or 1 or more.
Meanwhile, the polyester copolymer according to the present invention has a number average molecular weight (Mn) of 10,000 to 40,000, more preferably 15,000 to 35,000.
According to other embodiment of the invention, there is provided an article molded from the above-mentioned polyester copolymer described above. The article may be a container into which things can be placed, such as a container for cosmetics, a container for food, and it may also be a bottle, a hot fill jar, a high-pressure container, a medical article and an article made of sheet and plate. In addition, the article may be manufactured as an injection article such as a lid, a cover, a toothbrush stand, or the like, or may be formed in a multi-layer structure with different kinds of materials.

**[ADVANTAGEOUS EFFECTS]**

The polyester copolymer according to the present invention is excellent in chemical resistance and transparency and thus can be usefully applied to the production of various containers.

**[DETAILED DESCRIPTION OF THE EMBODIMENTS]**

Hereinafter, preferred examples will be presented to facilitate understanding of the present invention. However, these examples are provided for a better understanding of the present invention only, and are not intended to limit the scope of the present invention.
The physical properties referred to in the preparation process of the following Examples and Comparative Examples were evaluated or the analyzes thereof were performed according to the following methods.

(1) Intrinsic viscosity (IV): 0.36±0.0002 g of a sample was dissolved in 30 mL of ortho-chlorophenol at 150°C for 15 minutes, and the intrinsic viscosity of the sample was measured using a Ubbelodhe viscometer in a thermostatic chamber at 35°C.

(2) Compositions of residues derived from an acid and a diol in the polyester copolymer were confirmed by 1H-NMR spectrum obtained at 25°C using a nuclear magnetic resonance apparatus (JEOL, 600 MHz FT-NMR) after the sample was dissolved in a $CDCl_3$ solvent at a concentration of 3 mg/m L.

**Example 1: Preparation of Polyester Copolymer**

Terephthalic acid (3257.4 g), ethylene glycol (1423.4 g), and isosorbide (229.2 g) were put into a 10 L volumetric reactor to which a column, and a condenser capable of being cooled by water were connected. $GeO_2$ (1.0 g) as a catalyst, phosphoric acid (1.46 g) as a stabilizer, and cobalt acetate (0.7 g) as a coloring agent were used.
Then, nitrogen was injected into the reactor to form a pressurized state in which a pressure of the reactor was higher than normal pressure by 1.0 kgf/cm$^2$ (absolute pressure: 1495.6 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.
Then, the pressure of the reactor was lowered from normal pressure up to 5 Torr (absolute pressure: 5 mmHg) over 30 minutes, and at the same time, the temperature of the reactor was raised up to 280°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity

(IV) of the mixture (molten material) in the reactor reached 0.55 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.75 dl/g.

A residue derived from terephthalic acid was 100 mol% with respect to a residue derived from a total acid included in the thus-prepared polyester copolymer, and a residue derived from isosorbide was 5 mol%, with respect to a residue derived from a total diol.

**Example 2: Preparation of Polyester Copolymer**

Terephthalic acid (3189.1 g), ethylene glycol (1334.1 g), and isosorbide (504.9 g) were put into a 10 L volumetric reactor to which a column, and a condenser capable of being cooled by water were connected. $GeO_2$ (1.0 g) as a catalyst, phosphoric acid (1.46 g) as a stabilizer, and cobalt acetate (0.7 g) as a coloring agent were used.

Then, nitrogen was injected into the reactor to form a pressurized state in which a pressure of the reactor was higher than normal pressure by 1.0 kgf/cm$^2$ (absolute pressure: 1495.6 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 280°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.50 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg. The particles were then kept in water at 70°C for 5 hours, then taken out and dried.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.95 dl/g.

A residue derived from terephthalic acid was 100 mol% with respect to a residue derived from a total acid included in the thus-prepared polyester copolymer, and a residue derived from isosorbide was 10 mol% with respect to a residue derived from a total diol.

**Example 3: Preparation of Polyester Copolymer**

Terephthalic acid (3356.5 g), ethylene glycol (1341.4 g), and isosorbide (826.6) were put into a 10 L volumetric reactor to which a column, and a condenser capable of being cooled by water were connected. $GeO_2$ (1.0 g) as a catalyst, phosphoric acid (1.46 g) as a stabilizer, Polysynthrene Blue RLS (Clarient Corp., 0.016 g) as a blue toner, Solvaperm Red BB (Clarient Corp., 0.004 g) as a red toner, polyethylene (LUTENE-H ME1000, LG Chem Ltd., 0.004 g) as a crystallizing agent, and Iganox 1076 (4 g) as an oxidation stabilizer were used.

Then, nitrogen was injected into the reactor to form a pressurized state in which a pressure of the reactor was higher than normal pressure by 0.5 kgf/cm$^2$ (absolute pressure: 1127.8 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized

state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 275°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.60 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from the terephthalic acid was 100 mol% with respect to a residue derived from a total acid included in the thus-prepared polyester copolymer, and a residue derived from the isosorbide was 5 mol% with respect to a residue derived from a total diol.

**Example 4: Preparation of Polyester Copolymer**

Terephthalic acid (4297.3 g), ethylene glycol (1845.8 g), cyclohexane-1,4-diyldimethanol (186.4 g), and isosorbide (189.0 g) were put into a 10 L volumetric reactor to which a column, and a condenser capable of being cooled by water were connected. $GeO_2$ (1.0 g) as a catalyst, phosphoric acid (1.46 g) as a stabilizer, cobalt acetate (1.1 g) as a coloring agent and TMA (trimellitic anhydrate, 22 g) as a branching agent were used.

Then, nitrogen was injected into the reactor to form a pressurized state in which a pressure of the reactor was higher than normal pressure by 1 $kgf/cm^2$ (absolute pressure: 1495.6 mmHg). Then, a temperature of the reactor was raised up to 220°C over 90 minutes, maintained at 220°C for 2 hours, and then raised up to 250°C over 2 hours. Next, a temperature of the reactor was maintained at 250°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 265°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.60 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, a residue derived from isosorbide was 2 mol%, and a residue derived from cyclohexanedimethanol was 5 mol%, with respect to a residue derived from a total diol.

**Example 5: Preparation of Polyester Copolymer**

Terephthalic acid (3316.0 g), ethylene glycol (1164.2 g), cyclohexane-1,4-diyldimethanol (230.1 g), and isosorbide (87.5 g) were put into a 10 L volumetric reactor to which a column, and a condenser capable of being cooled by water were connected. $GeO_2$ (1.0 g) as a catalyst, phosphoric acid (1.46 g) as a stabilizer, and cobalt acetate (0.8 g) as a coloring agent were used.

Then, nitrogen was injected into the reactor to form a pressurized state in which a pressure of the reactor was higher than normal pressure by 2 $kgf/cm^2$ (absolute pressure: 2231.1 mmHg). Then, a temperature of the reactor was raised up to 220°C over 90 minutes, maintained at 220°C for 2 hours, and then raised up to 255°C over 2 hours. Next, a temperature of the reactor was maintained at 255°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 285°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.55 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, a residue derived from isosorbide was 2 mol%, and a residue derived from cyclohexanedimethanol was 8 mol%, with respect to a residue derived from a total diol.

**Example 6: Preparation of Polyester Copolymer**

Terephthalic acid (3124.0 g), ethylene glycol (1330.2 g), cyclohexane-1,4-diyldimethanol (216.8 g), and isosorbide (219.8 g) were put into a 10 L volumetric reactor to which a column, and a condenser capable of being cooled by water were connected. $GeO_2$ (1.0 g) as a catalyst, phosphoric acid (1.46 g) as a stabilizer, cobalt acetate (1.0 g) as a coloring agent, and Iganox 1076 (15.4 g) as an oxidation stabilizer were used.

Then, nitrogen was injected into the reactor to form a pressurized state in which a pressure of the reactor was higher than normal pressure by 1.5 $kgf/cm^2$ (absolute pressure: 1715.5 mmHg). Then, a temperature of the reactor was raised up to 220°C over 90 minutes, maintained at 220°C for 2 hours, and then raised up to 250°C over 2 hours. Next, a temperature of the reactor was maintained at 250°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 270°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.60 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.75 dl/g.

A residue derived from terephthalic acid was 100 mol% with respect to a residue derived from a total acid included in the thus-prepared polyester copolymer, a residue derived from isosorbide was 4 mol%, and a residue derived from cyclohexanedimethanol was 8 mol%, with respect to a residue derived from a total diol.

**Example 7: Preparation of Polyester Copolymer**

Terephthalic acid (3371.0 g), ethylene glycol (1435.3 g), cyclohexane-1,4-diyldimethanol (438.6 g), and isosorbide (177.9 g) were put into a 10 L volumetric reactor to which a column, and a condenser capable of being cooled by water were connected. $GeO_2$ (1.0 g) as a catalyst, phosphoric acid (1.46 g) as a stabilizer, Polysynthrene Blue RLS (Clarient Corp., 0.013 g) as a blue toner, and Solvaperm Red BB (Clarient Corp., 0.004 g) as a red toner were used.

Then, nitrogen was injected into the reactor to form a pressurized state in which a pressure of the reactor was higher than normal pressure by 1 $kgf/cm^2$ (absolute pressure: 1495.6 mmHg). Then, a temperature of the reactor was raised up to 220°C over 90 minutes, maintained at 220°C for 2 hours, and then raised up to 265°C over 2 hours. Next, a temperature of the reactor was maintained at 265°C until the mixture in the reactor became transparent by visually observing the mixture, thereby performing the esterification reaction. In this process, by-products were spilled through

the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 275°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.70 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, a residue derived from isosorbide was 3 mol% and a residue derived from cyclohexanedimethanol was 15 mol%, with respect to a residue derived from a total diol.

**Example 8: Preparation of Polyester Copolymer**

Terephthalic acid (3158.8 g), ethylene glycol (1427.5 g), and cyclohexane-1,4-diyldimethanol (520.6 g) were put into a 10 L volumetric reactor to which a column, and a condenser capable of being cooled by water were connected. $GeO_2$ (1.0 g) as a catalyst, phosphoric acid (1.46 g) as a stabilizer, Polysynthrene Blue RLS (Clarient Corp., 0.020 g) as a blue toner, and Solvaperm Red BB (Clarient Corp., 0.008 g) as a red toner were used.

Then, nitrogen was injected into the reactor to form a pressurized state in which a pressure of the reactor was higher than normal pressure by 0.5 $kgf/cm^2$ (absolute pressure: 1127.8 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 275°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.80 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, and a residue derived from cyclohexanedimethanol was 18 mol%, with respect to a residue derived from a total diol.

**Example 9: Preparation of Polyester Copolymer**

Dimethyl phthalate (3727.0 g), ethylene glycol (2620.5 g), and isosorbide (841.5 g) were put into a 10 L volumetric reactor to which a column, and a condenser capable of being cooled by water were connected. Mn(II) acetate tetrahydrate(1.5 g) and $Sb_2O_3$(1.8 g) as a catalyst, phosphoric acid (1.46 g) as a stabilizer, and cobalt acetate (0.7 g) as a coloring agent were used.

Then, nitrogen was injected into the reactor to set a pressure of the reactor to normal pressure. Then, a temperature of the reactor was raised up to 220°C over 90 minutes, maintained at 220°C for 2 hours, and then raised up to 240°C over 2 hours. Next, a temperature of the reactor was maintained at 240°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum

reaction.

Then, the pressure of the reactor was lowered from normal pressure up to 5 Torr (absolute pressure: 5 mmHg) over 30 minutes, and at the same time, the temperature of the reactor was raised up to 265°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.50 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.95 dl/g.

A residue derived from dimethyl phthalate was 100 mol% with respect to a residue derived from a total acid included in the thus-prepared polyester copolymer, and a residue derived from isosorbide was 10 mol% with respect to a residue derived from a total diol.

**Example 10: Preparation of Polyester Copolymer**

Terephthalic acid (3029.7 g), isophthalic acid (159.5 g), ethylene glycol (1334.1 g), and isosorbide (504.9 g) were put into a 10 L volumetric reactor to which a column, and a condenser capable of being cooled by water were connected. $GeO_2$ (1.0 g) as a catalyst, phosphoric acid (1.46 g) as a stabilizer, and cobalt acetate (0.7 g) as a coloring agent were used.

Then, nitrogen was injected into the reactor to form a pressurized state in which a pressure of the reactor was higher than normal pressure by 1.0 $kgf/cm^2$ (absolute pressure: 1495.6 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 280°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.50 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.95 dl/g.

A residue derived from terephthalic acid and isophthalic acid was 100 mol% with respect to a residue derived from a total acid included in the thus-prepared polyester copolymer, and a residue derived from isosorbide was 10 mol% with respect to a residue derived from a total diol.

**Comparative Example 1: Preparation of Polyester Copolymer**

Terephthalic acid (3000.5 g), ethylene glycol (1064.6 g), and isosorbide (1187.5 g) were put into a 10 L volumetric reactor to which a column, and a condenser capable of being cooled by water were connected. $GeO_2$ (1.0 g) as a catalyst, phosphoric acid (1.46 g) as a stabilizer, Polysynthrene Blue RLS (Clarient Corp., 0.017 g) as a blue toner, and

Solvaperm Red BB (Clarient Corp., 0.006 g) as a red toner were used.

Then, nitrogen was injected into the reactor to form a pressurized state in which a pressure of the reactor was higher than normal pressure by 0.5 kgf/cm$^2$ (absolute pressure: 1127.8 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 100 Torr (absolute pressure: 100 mmHg) over 10 minutes. The pressure was maintained for 1 hour and then lowered to 5 Torr (absolute pressure: 5 mmHg) over 30 minutes. At the same time, the temperature of the reactor was raised up to 280°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.60 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, and a residue derived from isosorbide was 25 mol% with respect to a residue derived from a total diol.

**Comparative Example 2: Preparation of Polyester Copolymer**

Terephthalic acid (3275.3 g), ethylene glycol (1217.2 g), and cyclohexane-1,4-diyldimethanol (582.5 g) were put into a 10 L volumetric reactor to which a column, and a condenser capable of being cooled by water were connected. $GeO_2$ (1.0 g) as a catalyst, phosphoric acid (1.46 g) as a stabilizer, and cobalt acetate (0.7 g) as a coloring agent were used.

Then, nitrogen was injected into the reactor to form a pressurized state in which a pressure of the reactor was higher than normal pressure by 1 kgf/cm$^2$ (absolute pressure: 1495.6 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 280°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.60 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, and a residue derived from cyclohexanedimethanol was 20.5 mol% with respect to a residue derived from a total diol.

**Comparative Example 3: Preparation of Polyester Copolymer**

Terephthalic acid (2953.7 g), ethylene glycol (717.1 g), and cyclohexane-1,4-diyldimethanol (1024.9 g) were put into a 10 L volumetric reactor to which a column, and a condenser capable of being cooled by water were connected. $GeO_2$ (1.0 g) as a catalyst, phosphoric acid (1.46 g) as a stabilizer, Polysynthrene Blue RLS (Clarient Corp., 0.012 g) as a blue toner, Solvaperm Red BB (Clarient Corp., 0.004 g) as a red toner and Irganox 1076 (4 g) as an oxidation stabilizer were used.

Then, nitrogen was injected into the reactor to form a pressurized state in which a pressure of the reactor was higher than normal pressure by 0.5 kgf/cm$^2$ (absolute pressure: 1127.8 mmHg). Then, a temperature of the reactor was raised up to 220°C over 90 minutes, maintained at 220°C for 2 hours, and then raised up to 255°C over 2 hours. Next, a temperature of the reactor was maintained at 255°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 280°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.80 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, and a residue derived from cyclohexanedimethanol was 40 mol% with respect to a residue derived from a total diol.

**Comparative Example 4: Preparation of Polyester Copolymer**

Terephthalic acid (2518.5 g), ethylene glycol (1044.1 g), cyclohexane-1,4-diyldimethanol (240.3 g) and isosorbide (398.7 g) were put into a 10 L volumetric reactor to which a column, and a condenser capable of being cooled by water were connected. $GeO_2$ (1.0 g) as a catalyst, phosphoric acid (1.46 g) as a stabilizer, Polysynthrene Blue RLS (Clarient Corp., 0.010 g) as a blue toner, and Solvaperm Red BB (Clarient Corp., 0.003 g) as a red toner were used.

Then, nitrogen was injected into the reactor to form a pressurized state in which a pressure of the reactor was higher than normal pressure by 1.5 kgf/cm$^2$ (absolute pressure: 1715.5 mmHg). Then, a temperature of the reactor was raised up to 220°C over 90 minutes, maintained at 220°C for 2 hours, and then raised up to 260°C over 2 hours. Next, a temperature of the reactor was maintained at 260°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 270°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.65 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer was 100 mol%, a residue derived from isosorbide was 11 mol% and a residue derived from cyclohexanedimethanol was 11 mol%, with respect to a residue derived from a total diol.

**Comparative Example 5: Preparation of Polyester Copolymer**

Terephthalic acid (3631.3 g) and ethylene glycol (1763.1 g) were put into a 10 L volumetric reactor to which a column, and a condenser capable of being cooled by water were connected. $GeO_2$ (1.0 g) as a catalyst, phosphoric acid (1.50 g) as a stabilizer, cobalt acetate (0.7 g) as a coloring agent and Irganox 1076 (17.5 g) as an oxidation stabilizer were used.

Then, nitrogen was injected into the reactor to form a pressurized state in which a pressure of the reactor was higher than normal pressure by 2 kgf/cm$^2$ (absolute pressure: 2231.1 mmHg). Then, a temperature of the reactor was

raised up to 220°C over 90 minutes, maintained at 220°C for 2 hours, and then raised up to 265°C over 2 hours. Next, a temperature of the reactor was maintained at 265°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 270°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.60 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

The particles were allowed to stand at 150°C for 1 hour to crystallize, and then put into a 20 L volumetric solid-phase polymerization reactor. Then, nitrogen was flowed into the reactor at a rate of 50 L/min. At this time, the temperature of the reactor was raised from room temperature up to 140°C at a rate of 40°C/hour, maintained at 140°C for 3 hours, and then raised up to 200°C at a rate of 40°C/hour, and maintained at 200°C. The solid-phase polymerization reaction was performed until the intrinsic viscosity (IV) of the particles in the reactor reached 0.75 dl/g.

A residue derived from terephthalic acid was 100 mol% with respect to a residue derived from a total acid included in the thus-prepared polyester copolymer, and a residue derived from ethylene glycol and diethylene glycol was 100 mol% with respect to a residue derived from a total diol.

**Comparative Example 6: Preparation of Polyester Copolymer**

Terephthalic acid (3329.2 g), ethylene glycol (1517.0 g), and cyclohexane-1,4-diyldimethanol (86.6 g) were put into a 10 L volumetric reactor to which a column, and a condenser capable of being cooled by water were connected. $GeO_2$ (1.0 g) as a catalyst, phosphoric acid (1.46 g) as a stabilizer, cobalt acetate (0.8 g) as a coloring agent and Polyethylene (LUTENE-H ME1000, available from LG Chem Ltd., 0.016 g) as the crystallizing agent were used.

Then, nitrogen was injected into the reactor to form a pressurized state in which a pressure of the reactor was higher than normal pressure by 1.5 $kgf/cm^2$ (absolute pressure: 1715.5 mmHg). Then, a temperature of the reactor was raised up to 220°C over 90 minutes, maintained at 220°C for 2 hours, and then raised up to 270°C over 2 hours. Next, a temperature of the reactor was maintained at 270°C until the mixture in the reactor became transparent by visually observing the mixture, thereby performing the esterification reaction. In this process, by-products were spilled through the column and the condenser. When the esterification reaction was completed, nitrogen in the reactor in a pressurized state was purged to the outside, thereby lowering the pressure in the reactor to normal pressure. Then, the mixture in the reactor was transferred to a 7 L volumetric reactor capable of performing a vacuum reaction.

Then, the pressure of the reactor was lowered from normal pressure up to 5 Torr (absolute pressure: 5 mmHg) over 30 minutes, and at the same time, the temperature of the reactor was raised up to 275°C over 1 hour, and the polycondensation reaction was carried out while maintaining the pressure of the reactor at 1 Torr (absolute pressure: 1 mmHg) or less. In the early stage of the polycondensation reaction, a stirring speed was set at a high speed. However, in accordance with the progress of the polycondensation reaction, when stirring force is weakened due to an increase in viscosity of the reaction product, or a temperature of the reaction product is raised to the set temperature or higher, the stirring speed may be appropriately adjusted. The polycondensation reaction was performed until the intrinsic viscosity (IV) of the mixture (molten material) in the reactor reached 0.65 dl/g. When the intrinsic viscosity of the mixture in the reactor reached a desired level, the mixture was discharged out of the reactor and stranded. The mixture was solidified with a cooling liquid and granulated to have an average weight of about 12 to 14 mg.

A residue derived from terephthalic acid was 100 mol% with respect to a residue derived from a total acid included in the thus-prepared polyester copolymer, and a residue derived from cyclohexanedimethanol was 3 mol% with respect to a residue derived from a total diol.

**Experimental Example**

The following physical properties were measured for the polyester copolymers prepared in Examples and Comparative Examples above.

1) Number average molecular weight: Measured using GPC (Gel Permeation Chromatography). Specifically, 0.03 g of a polyester copolymer to be tested for molecular weight was added to 3 mL of o-chlorophenol and dissolved at 150°C for 15 minutes. Then, 9 mL of chloroform was added thereto while cooling to room temperature to prepare a sample. Then, gel permeation chromatography of the sample was performed using two columns (Shodex LF 804) at a temperature of 40°C and a flow rate of 0.7 mL/min. By using polystyrene standards, the number average molecular weight (Mn) was calculated.

2) Tm after crystallization: The polyester copolymers prepared in Examples and Comparative Examples above were crystallized at 180°C for 100 minutes, and then their melting points were measured by differential scanning calorimetry (DSC).

3) Haze: A specimen with a thickness of 6 mm was prepared, immersed in ethanol, and then stored at 60°C for 24 hours. Then, the specimen was washed with water, and the haze of the specimen was measured using a CM-3600A Spectrophotometer (Minolta) according to the test method specified by ASTM D1003-97.

4) Semi-crystallization time: Measured by differential scanning calorimetry (DSC). First, the polyester copolymers prepared in Examples and Comparative Examples were completely melted, and then the temperature was maintained at a temperature at which crystallization was performed. At this time, the time (minutes) where a heating amount indicates half of the total heating amount that generates heat during crystallization was measured.

The results are shown in Table 1 below.

[Table 1]

| | Number average molecular weight | After crystallization Tm(°C) | After immersion in ethanol Haze (%) | Semi-crystallization time (min) |
|---|---|---|---|---|
| Example 1 | 24,000 | 240 | 2 | 10 |
| Example 2 | 38,000 | 235 | 3 | 55 |
| Example 3 | 16,000 | 220 | 4 | 90 |
| Example 4 | 20,000 | 235 | 2 | 15 |
| Example 5 | 18,000 | 230 | 3 | 35 |
| Example 6 | 32,000 | 230 | 3.5 | 50 |
| Example 7 | 21,000 | 220 | 4 | 75 |
| Example 8 | 27,000 | 220 | 4.5 | 60 |
| Example 9 | 39,500 | 235 | 3 | 55 |
| Example 10 | 38,500 | 235 | 3 | 55 |
| Comparative Example 1 | 17,000 | (Not observed)[1)] | 15 | >100 |
| Comparative Example 2 | 20,000 | (Not observed) | 12 | >100 |
| Comparative Example 3 | 21,000 | (Not observed) | 75 | >100 |
| Comparative Example 4 | 23,000 | (Not observed) | 20 | >100 |
| Comparative Example 5 | 28,000 | 250 | 15 | 1 |
| Comparative Example 6 | 26,000 | 245 | 7 | 5 |
| 1) As a result of measurement by DSC, no melting point was observed | | | | |

## Claims

1. A polyester copolymer comprising a first repeating unit represented by the following Chemical Formula 1; and at least one of a second repeating unit represented by the following Chemical Formula 2 and a third repeating unit represented by the following Chemical Formula 3,
wherein the polyester copolymer satisfies the following Mathematical Formula 1:

[Mathematical Formula 1]

$$H \leq 6$$

in Mathematical Formula 1,
H means a haze value measured according to ASTM D1003-97 after a polyester copolymer specimen (thickness: 6 mm) is immersed in ethanol and then stored at 60°C for 24 hours,

[Chemical Formula 1]

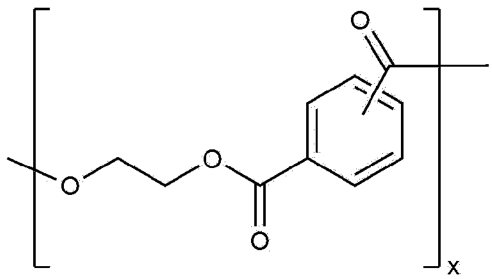

[Chemical Formula 2]

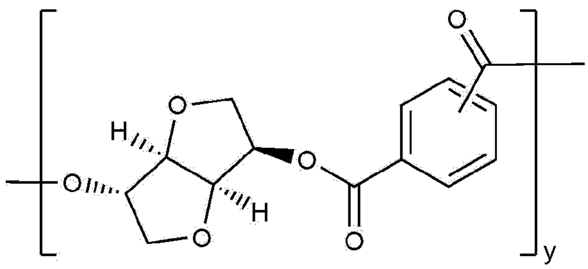

[Chemical Formula 3]

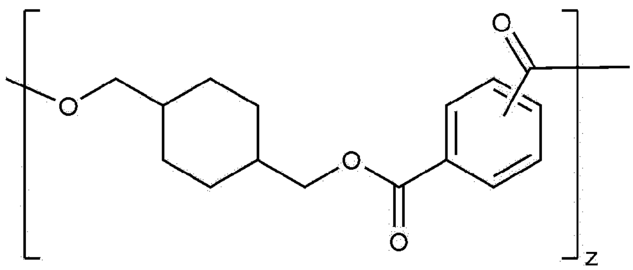

in Chemical Formulas 1 to 3,
x, y, and z are mole fractions in the copolymer, respectively, wherein the sum of y and z is 5 mol% or more and less than 20 mol%.

2. The polyester copolymer according to claim 1, wherein
the H is 5 or less.

**3.** The polyester copolymer according to claim 1, wherein the polyester copolymer comprises both the second repeating unit and the third repeating unit.

**4.** The polyester copolymer according to claim 3, wherein y is 1 mol% or more and 5 mol% or less, and z is 5 mol% or more and 15 mol% or less.

**5.** The polyester copolymer according to claim 1, wherein the polyester copolymer has a number average molecular weight of 10,000 to 40,000.

**6.** The polyester copolymer according to claim 1, wherein the polyester copolymer has a melting point of 240°C or less after crystallization at 180°C for 100 minutes.

**7.** The polyester copolymer according to claim 1, wherein the polyester copolymer has a semi-crystallization time of 100 minutes or less.

**8.** An article comprising the polyester copolymer according to any one of claims 1 to 7.

**INTERNATIONAL SEARCH REPORT**

International application No.
**PCT/KR2019/005998**

A. CLASSIFICATION OF SUBJECT MATTER

***C08G 63/183(2006.01)i, C08G 63/58(2006.01)i, C08G 63/199(2006.01)i, C08L 67/02(2006.01)i***

According to International Patent Classification (IPC) or to both national classification and IPC

B. FIELDS SEARCHED

Minimum documentation searched (classification system followed by classification symbols)
C08G 63/183; B29C 47/00; B29C 55/04; B32B 27/36; C08G 63/16; C08G 63/199; C08G 63/66; C08J 5/18; C08G 63/58; C08L 67/02

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal), STN (Registry, Caplus), Google & Keywords: polyester, terephthalic acid, ethylene glycol, isosorbide, cyclohexanedimethanol, haze, transparency, chemical resistance

C. DOCUMENTS CONSIDERED TO BE RELEVANT

| Category* | Citation of document, with indication, where appropriate, of the relevant passages | Relevant to claim No. |
|---|---|---|
| X | WO 2018-101320 A1 (KURARAY CO., LTD.) 07 June 2018<br>See claims 1, 7; and paragraphs [0088], [0092], [0094]-[0095], [0097]-[0099]. | 1-8 |
| A | KR 10-2014-0092113 A (SK CHEMICALS CO., LTD.) 23 July 2014<br>See the entire document. | 1-8 |
| A | KR 10-2018-0058526 A (SK CHEMICALS CO., LTD.) 01 June 2018<br>See the entire document. | 1-8 |
| A | KR 10-0535850 B1 (E.I. DU PONT DE NEMOURS AND COMPANY) 12 December 2005<br>See the entire document. | 1-8 |
| A | KR 10-1826812 B1 (LOTTE CHEMICAL CORPORATION) 08 February 2018<br>See the entire document. | 1-8 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 AUGUST 2019 (26.08.2019) | **26 AUGUST 2019 (26.08.2019)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

**INTERNATIONAL SEARCH REPORT**
Information on patent family members

International application No.
**PCT/KR2019/005998**

| Patent document cited in search report | Publication date | Patent family member | Publication date |
|---|---|---|---|
| WO 2018-101320 A1 | 07/06/2018 | CN 109996829 A | 09/07/2019 |
| | | KR 10-2019-0084129 A | 15/07/2019 |
| | | TW 201833175 A | 16/09/2018 |
| KR 10-2014-0092113 A | 23/07/2014 | TW 201434637 A | 16/09/2014 |
| | | TW I588019 B | 21/06/2017 |
| | | WO 2014-112770 A1 | 24/07/2014 |
| KR 10-2018-0058526 A | 01/06/2018 | CN 109982846 A | 05/07/2019 |
| | | TW 201833218 A | 16/09/2018 |
| | | WO 2018-097655 A1 | 31/05/2018 |
| KR 10-0535850 B1 | 12/12/2005 | AU 3547299 A1 | 08/11/1999 |
| | | AU 741388 B2 | 29/11/2001 |
| | | CA 2328861 A1 | 28/10/1999 |
| | | CA 2328861 C | 08/01/2008 |
| | | CN 1099480 C | 22/01/2003 |
| | | CN 1298461 A | 06/06/2001 |
| | | EP 1147249 A1 | 24/10/2001 |
| | | EP 1147249 B1 | 27/06/2007 |
| | | JP 2002-512304 A | 23/04/2002 |
| | | JP 3395972 B2 | 14/04/2003 |
| | | US 6063465 A | 16/05/2000 |
| | | WO 99-54533 A1 | 28/10/1999 |
| KR 10-1826812 B1 | 08/02/2018 | None | |

Form PCT/ISA/210 (patent family annex) (January 2015)